# FASCICULE DE BREVET EUROPEEN

(11) **EP 4 144 196 B1**
(45) Date de publication et mention de la délivrance du brevet: **01.05.2024**
(21) Numéro de dépôt: 22193841.8
(22) Date de dépôt: 05.09.2022
(51) Int. Cl.: A01B 73/04, A01D 34/66

(54) **DISPOSITIF AGRICOLE À DEUX UNITÉS DE TRAVAIL**
LANDWIRTSCHAFTLICHE VORRICHTUNG MIT ZWEI ARBEITSEINHEITEN
AN AGRICULTURAL DEVICE WITH TWO WORK UNITS

(30) Priorité: 07.09.2021 FR 2109363
(43) Date de publication de la demande: 08.03.2023
(73) Titulaire: Kuhn SAS, 67700 Saverne (FR)
(72) Inventeur: HECKLY, Pascal, 67700 SAVERNE (FR)
(74) Mandataire: Hager, Esther Evelyne

(56) Documents cités:
- EP-A1- 3 143 861
- WO-A1-2015/075356
- NL-C2- 2 004 859

## Description

La présente invention concerne le domaine du machinisme agricole, plus particulièrement des équipements et machines de traitement des végétaux et a pour objet un dispositif agricole à deux unités de travail et un véhicule comprenant un tel dispositif.

L'invention vise plus particulièrement un dispositif agricole comportant une première unité et une deuxième unité de travail. Ce dispositif peut occuper une configuration de travail, dans laquelle chaque unité repose au moins partiellement sur le sol et une configuration de transport. Il est relié à un châssis pouvant être monté sur ou intégré à un véhicule se déplaçant selon une direction d'avance.

Le type de dispositif agricole visé comprend une potence montée pivotante sur le châssis autour d'un axe de soulèvement sensiblement parallèle à la direction d'avance et autour duquel le dispositif est pivoté pour aboutir aux différentes configurations précitées, chaque unité comportant une pluralité d'organes de traitement de végétaux et s'étendant selon une direction longitudinale respective transversale par rapport à la direction d'avance au moins en configuration de travail. De plus, chaque unité est montée pivotante par rapport à la potence, autour d'un axe de liaison transversal par rapport à la direction longitudinale correspondante et chaque unité comporte une extrémité guidée respective et une extrémité libre respective, plus éloignée de l'axe de liaison.

Un tel dispositif comprenant deux unités est notamment connu du document EP-A-3071 008.

Le fait que chaque unité de travail soit montée librement pivotante sur la potence concernée permet au dispositif de suivre les inégalités du sol.

Dans le dispositif divulgué par ce document EP, chaque unité de travail est reliée à sa potence associée par un actionneur (vérin) propre.

Un désavantage d'une telle réalisation est qu'elle nécessite un nombre important de vérins impliquant un coût de revient et de maintenance plus élevé et aboutissant à une construction plus complexe. L'assemblage de ces vérins est notamment complexe du fait du manque d'espace aux alentours des axes de liaison, entre la potence et chaque unité, particulièrement lorsque les directions longitudinales des unités sont comprises dans un même plan en vue de dessus.

Le but principal de l'invention est de proposer une solution, pour une machine agricole du type précité, permettant de surmonter au moins cet inconvénient de manière simple et peu coûteuse, tout en fournissant les mêmes fonctionnalités.

A cet effet, l'invention a pour objet un dispositif agricole du type évoqué cidessus, qui est en outre caractérisé en ce qu'il comporte un actionneur central configuré pour exercer sur chacune des première et deuxième unités de travail, au moins en configuration de travail du dispositif, un effort d'écartement s'opposant à un mouvement de pivotement vers le bas de son extrémité libre autour de l'axe de liaison correspondant.

L'invention sera mieux comprise grâce à la description ci-après, qui se rapporte à des modes de réalisation préférés, donnés à titre d'exemples non limitatifs et expliqués avec référence aux dessins schématiques annexés, dans lesquels :
[Fig. 1A] est une vue en élévation arrière d'une machine équipée d'un châssis et de deux dispositifs agricoles selon une variante de l'invention, dans laquelle chaque unité est reliée à la potence par un axe de liaison propre, sous la forme d'une faucheuse à disques montée sur l'arrière d'un véhicule tracteur et comprenant un châssis et deux dispositifs agricoles occupant leur configuration de travail (en appui sur le sol) ;
[Fig. 1B] est une vue de dessus d'une machine attelée à un véhicule tracteur et équipée d'un châssis et d'un dispositif agricole selon une variante préférée de l'invention en configuration de travail ;
[Fig. 2] est une vue en élévation arrière d'une machine équipée de dispositifs agricoles selon la variante préférée, attelée à et/ou portée par un véhicule tracteur, les dispositifs agricoles étant dans leur configuration de transport ;
[Fig. 3] est une vue en élévation arrière de la machine de la figure 1B attelée sur un véhicule tracteur, le dispositif agricole étant dans sa configuration de manoeuvre ;
[Fig. 4] est une vue en perspective de la machine (seule) représentée sur la figure 1B ;
[Fig. 5A] et
[Fig. 5B] sont des vues partielles, de détail et à une autre échelle du dispositif représenté sur la figure 4, respectivement illustré avec l'actionneur central allongé et rétracté au maximum et
[Fig. 6] est une représentation simplifiée du circuit hydraulique du dispositif connecté au circuit hydraulique du véhicule tracteur selon l'invention.

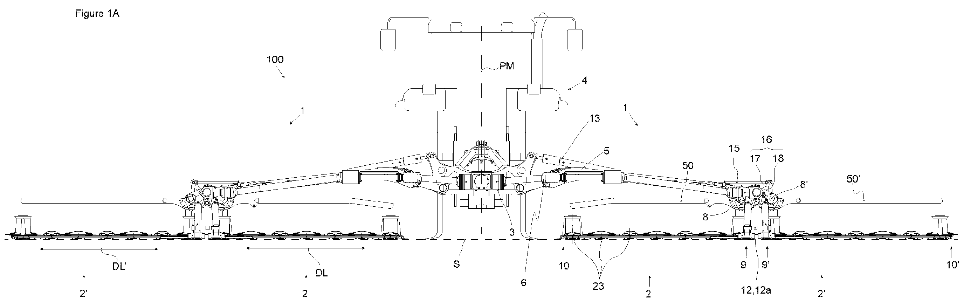

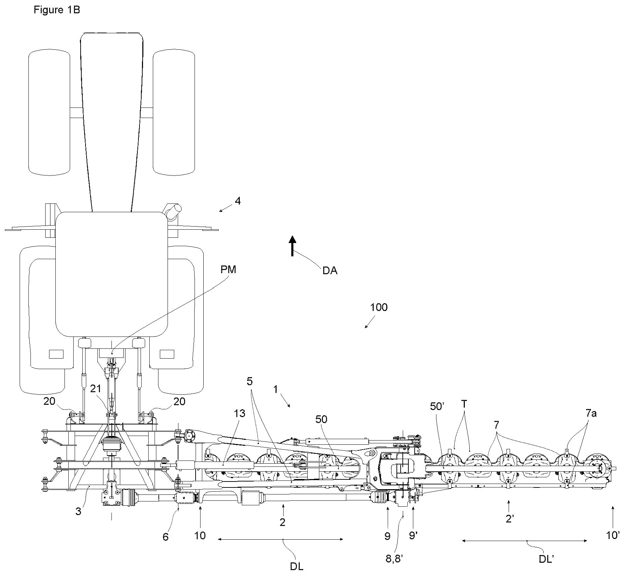

Les figures 1 à 5 illustrent, par le biais de formes de réalisation non limitatives, un dispositif agricole (1) comportant une première unité (2) et une deuxième unité (2') de travail, le dispositif (1) pouvant occuper une configuration de travail, dans laquelle chaque unité (2, 2') repose au moins partiellement sur le sol (S) et une configuration de transport.

Ce dispositif (1) est relié à un châssis (3) pouvant être monté sur ou intégré à un véhicule (4) tracteur se déplaçant selon une direction d'avance (DA), le dispositif (1) comprenant une potence (5) montée pivotante sur le châssis (3) autour d'un axe de soulèvement (6) sensiblement parallèle à la direction d'avance (DA) et autour duquel le dispositif (1) est pivoté pour aboutir aux différentes configurations précitées.

Chaque unité (2, 2') comporte une pluralité d'organes de traitement (7) de végétaux et s'étend selon une direction longitudinale (DL, DL') respective transversale par rapport à la direction d'avance (DA) au moins en configuration de travail. Chaque unité (2, 2') est montée pivotante par rapport à la potence (5) autour d'un axe de liaison (8, 8') transversal par rapport à la direction longitudinale (DL, DL') correspondante, et chaque unité (2, 2') comporte une extrémité guidée (9, 9') respective et une extrémité libre (10, 10') respective, plus éloignée de l'axe de liaison (8, 8') correspondant que l'extrémité guidée (9, 9') correspondante.

Conformément à l'invention, le dispositif agricole (1) est caractérisé en ce qu'il comporte un actionneur central (12) configuré pour exercer sur chacune des unités (2, 2'), au moins en configuration de travail du dispositif (1), un effort d'écartement s'opposant à un mouvement de pivotement vers le bas de son extrémité libre (10, 10') autour de l'axe de liaison (8, 8') correspondant.

Ainsi, l'invention permet, avec une construction simple, d'économiser le montage de vérins entre la potence (5) et chacune des unités (2, 2'). Le fait de monter moins de vérins entre la potence et les unités permet également de dégager avantageusement de l'espace aux alentours du ou de chaque axe de liaison (8, 8'). En outre, l'effort d'écartement est réglé de sorte qu'en configuration de travail sur sol (S) plan, les directions longitudinales (DL, DL') des deux unités (2, 2') soient parallèles vues selon la direction d'avance (DA), ce qui permette de réduire les dégâts potentiels occasionnés au tapis végétal du sol (S).

En effet, compte tenu de l'assemblage des unités (2, 2') avec la potence (5) et de la configuration de l'actionneur central (12), la position d'une unité (2, 2') par rapport à la potence (5) peut impacter la position de l'autre unité (2', 2) par rapport à cette potence (5).

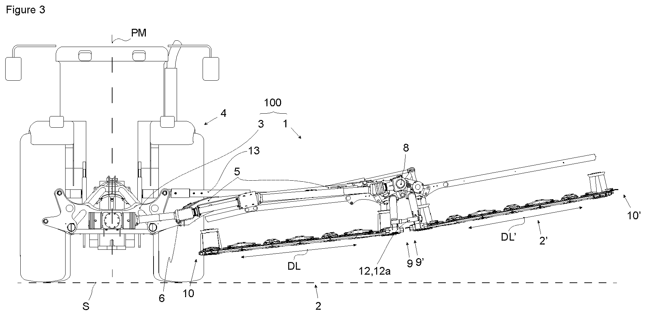

L'homme du métier comprend que le dispositif ou équipement agricole 1 selon l'invention peut être mis en oeuvre seul (voir figures 1B et 3) ou préférentiellement par paire, par exemple arrangés symétriquement de part et d'autre d'un châssis (3). Avantageusement, les deux unités (2, 2') de chaque dispositif (1) ont alors des dimensions et des masses similaires, mais pas nécessairement.

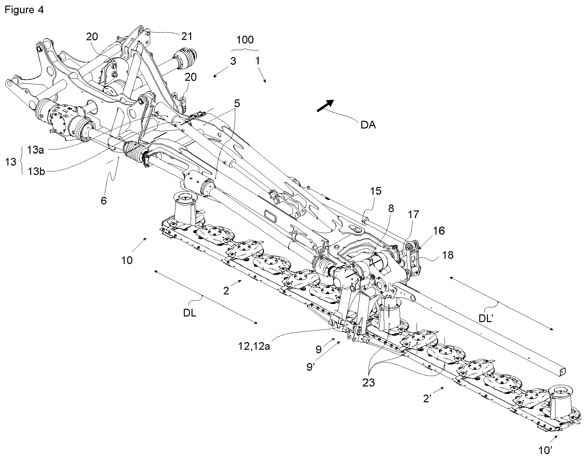

De préférence, les deux directions longitudinales (DL, DL') sont parallèles entre elles, au moins vues de dessus (figure 1B), en configuration de travail. De préférence, les deux directions longitudinales (DL, DL') sont comprises dans un même plan en vue de dessus, au moins en configuration de travail (voir figures 1 et 4), optimisant ainsi la largeur du dispositif (1) en configuration de travail au prorata du nombre d'organes de traitement (7). On notera que la largeur du dispositif (1) correspond à la dimension selon la direction longitudinale (DL) de la première unité (2), et de préférence selon les dimensions longitudinales (DL, DL') des deux unités (2, 2'). De plus, cela permet de diminuer la longueur du dispositif (1) suivant la direction d'avance (DA). Les deux directions longitudinales (DL, DL') sont préférentiellement perpendiculaires à la direction d'avance (DA) au moins en configuration de travail, augmentant ainsi la largeur du dispositif (1) en configuration de travail.

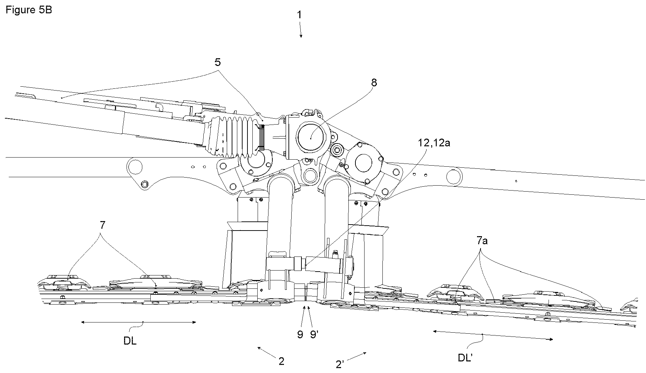

Ainsi qu'il ressort de la figure 5B, l'actionneur central (12) peut se contracter de telle manière que les directions longitudinales (DL, DL') forment un angle inférieur à 180° vers le bas, permettant de suivre davantage les irrégularités du sol (S). Lorsque les extrémités guidées (9, 9') sont en appui l'une contre l'autre, l'actionneur central (12) est contracté au maximum.

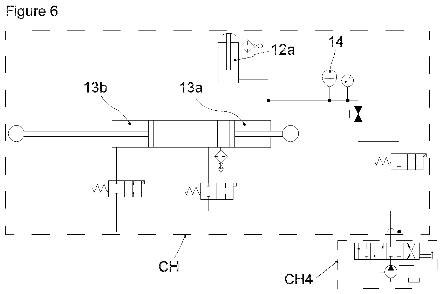

Avantageusement, l'actionneur central (12) comprend ou consiste en un vérin central (12a) hydraulique. Le dispositif (1) comporte un circuit hydraulique (CH) (figure 6). De manière à simplifier le dispositif (1) et son circuit hydraulique (CH), le vérin central (12a) est simple effet et linéaire. Le vérin central (12a) s'étend, en configuration de travail, au moins partiellement entre les deux unités (2, 2') et en-dessous du ou de chaque axe de liaison (8, 8').

Le vérin central (12a) s'étend au moins sensiblement parallèlement à l'une des directions longitudinales (DL, DL'). Ainsi, l'effort d'écartement est dirigé sensiblement parallèlement à l'une au moins des directions longitudinales (DL, DL'). De préférence, le vérin central (12a) ne peut pas pivoter par rapport à la deuxième unité (2') selon un axe parallèle à la direction d'avance (DA), assurant un certain amortissement lorsque les extrémités guidées (9, 9') des unités (2, 2') entrent en contact. Le corps du vérin central (12a) est préférentiellement fixé à la deuxième unité (2'), par exemple par soudage. Du fait des articulations des unités (2, 2') autour du ou de chaque axe de liaison (8, 8'), l'effort d'écartement du vérin central (12a) peut provoquer le pivotement vers le haut de l'extrémité libre (10, 10') d'au moins une des unités (2, 2') autour de son axe de liaison (8, 8').

En variante, l'actionneur central (12) peut aussi comprendre ou être constitué par un ressort. Selon une autre variante, l'actionneur central (12) peut aussi comprendre ou être constitué par un vérin rotatif.

Afin que le dispositif (1) puisse présenter un encombrement réduit lorsqu'il n'est pas utilisé ou qu'il doit être transporté, la deuxième unité (2') est déplaçable par rapport à la première unité (2) autour de l'axe de liaison (8, 8') correspondant jusqu'à une position repliée. Dans la position repliée, la potence (5) est située au moins partiellement entre les organes de traitement (7) de la première unité (2) et les organes de traitement (7) de la deuxième unité (2'). Dans la configuration de transport du dispositif (1), la potence (5) est orientée sensiblement verticalement. Dans la configuration de transport du dispositif (1), la potence (5) est située au moins partiellement entre les unités (2, 2'). Respectivement, dans la configuration de transport du dispositif (1), la potence (5) est située au moins partiellement entre les organes de traitement (7) de la première unité (2) et les organes de traitement (7) de la deuxième unité (2'). Dans la configuration de transport, les unités (2, 2') s'étendent parallèlement entre elles réduisant l'encombrement du dispositif (1). De préférence, dans la configuration de transport, les unités (2, 2') s'étendent également sensiblement parallèlement à la potence (5). En configuration de transport, la potence (5) est sensiblement perpendiculaire à la direction d'avance (DA). Le châssis (3) est de préférence au moins sensiblement symétrique par rapport à un plan médian (PM). Le véhicule (4) est aussi préférentiellement symétrique par rapport au plan médian (PM). En configuration de transport, la potence (5) est parallèle au plan médian (PM).

Ainsi qu'il ressort des figures 1 notamment, chaque unité (2, 2') comporte une poutre longitudinale (50, 50') située au-dessus des organes de traitement (7) en configuration de travail. La ou chaque poutre longitudinale (50, 50') s'étend de préférence parallèlement à la direction longitudinale (DL, DL') respective. En configuration de transport, la potence (5) est préférentiellement située entre les poutres longitudinales (50, 50') respectivement des première et deuxième unités (2, 2'), évitant de devoir aménager une des ou les unités (2, 2') pour qu'elle puisse accueillir la potence (5) en configuration de transport.

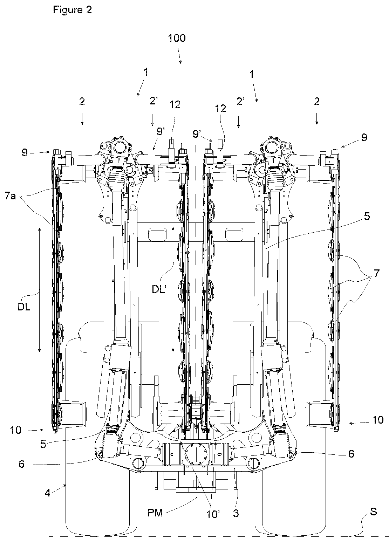

Afin de faciliter le repliage et simplifier les mouvements relatifs entre les unités (2 et 2'), l'actionneur central (12) est désolidarisé de l'une des unités (2, 2') au moins en configuration de transport (figure 2). Comme le montrent les figures, l'actionneur central (12) est de préférence solidaire de l'une seulement des deux unités (2, 2') et est en appui sur l'autre unité (2, 2'), au moins en configuration de travail et préférentiellement aussi en configuration de manoeuvre, permettant le pivotement des extrémités libres (10, 10') des unités (2, 2') vers le haut en configuration de travail au-delà de l'allongement maximal de l'actionneur central (12). En outre, cette caractéristique permet de passer le dispositif (1) en configuration de transport sans devoir descendre du tracteur (4) et/ou sans action supplémentaire. Ainsi, l'actionneur central (12) est de préférence désolidarisé de l'une des unités (2, 2') quelle que soit la configuration du dispositif (1).

De manière avantageuse, en configuration de travail, l'actionneur central (12) est solidaire de la deuxième unité (2'). Ainsi qu'il ressort des figures, la deuxième unité (2') est de préférence l'unité la plus externe par rapport au châssis (3) en configuration de travail. En configuration de travail, l'actionneur central (12) est au moins en appui sur la première unité (2) et préférentiellement aussi, dans la configuration de manoeuvre. L'actionneur central (12) est ainsi en liaison ponctuelle avec l'une des unités de travail (2, 2') et préférentiellement la première unité (2). La première unité (2) est la plus proche du châssis (3) en configuration de travail. En variante, l'actionneur central (12) peut être solidaire des deux unités (2, 2') en configuration de travail et être désolidarisé de la première unité (2) en configuration de transport. Par exemple, l'actionneur central (12) pourrait être solidarisé, en configuration de travail, à la première unité (2) par un boulon démontable pour passer en configuration de transport.

En mettant en oeuvre une simple liaison ponctuelle, au moins en configuration de travail, de l'actionneur central (12) avec l'une des unités de travail (2, 2'), il est possible d'écarter mutuellement les extrémités guidées (9, 9') des unités (2, 2') de manière suffisante, même avec un actionneur central (12) linéaire de faible course. De plus, on aboutit à une liaison simplifiée avec l'unité (2) à laquelle l'actionneur central (12) n'est pas relié en permanence.

Conformément à une disposition avantageuse, le dispositif (1) est également configuré pour occuper une configuration de manoeuvre dans laquelle la potence (5) est légèrement relevée autour de l'axe de soulèvement (6) par rapport à sa position en configuration de travail, permettant des déplacements du dispositif (1) sans qu'il interfère avec le sol (S) et sans avoir à le transposer en configuration de transport, notamment lors de demi-tours en bout de champs. Dans la configuration de manoeuvre (figure 3), l'actionneur central (12) est de préférence allongé au maximum, éloignant davantage du sol (S) l'extrémité libre (10') de la deuxième unité (2'). En effet, l'extrémité libre (10') de la deuxième unité (2') étant la plus éloignée du châssis (3), elle présente plus de risques d'entrer en contact avec le sol (S) lorsque le dispositif (1) est déplacé sur un sol (S) accidenté. Le véhicule (4) comporte un circuit hydraulique (CH4). Le circuit hydraulique (CH4) du véhicule comporte au moins une pompe ( Pour allonger l'actionneur central (12), le vérin central (12a) est de préférence alimenté en fluide sous pression. De préférence ce fluide provient du circuit hydraulique (CH4) du véhicule (4) portant ou intégrant le dispositif (1), tel que représenté sur la figure 6. En configuration de manoeuvre, le vérin central (12a) est alimenté de sorte qu'il soit allongé. Il ressort de ce qui précède qu'en configuration de manoeuvre du dispositif (1), l'actionneur central (12) exerce sur chacune des unités (2, 2') un effort d'écartement s'opposant à un mouvement de pivotement vers le bas de son extrémité libre (10, 10') autour de l'axe de liaison (8, 8') correspondant.

Dans un mode de réalisation alternatif non représenté, l'actionneur central (12) est relié au circuit hydraulique (CH4) du véhicule (4) par une valve, par exemple un régulateur de pression, de sorte à exercer sur chacune des unités (2, 2'), au moins en configuration de travail du dispositif (1), un effort d'écartement s'opposant à un mouvement de pivotement vers le bas de l'extrémité libre (10, 10') de chacune des unités (2, 2') autour de l'axe de liaison (8, 8') correspondant.

Dans le mode de réalisation préféré, le vérin central (12a) est hydrauliquement relié à au moins un accumulateur d'énergie (14), au moins dans la configuration de travail du dispositif (1). De plus, dans la configuration de travail, le vérin central (12a) et l'accumulateur d'énergie (14) sont en circuit fermé, ainsi qu'il ressort de la figure 6. De cette manière les unités (2, 2') peuvent pivoter par rapport à la potence (5) autour de l'axe de liaison (8, 8') correspondant selon les irrégularités du sol (S), lors du déplacement du dispositif (1) en configuration de travail. Préférentiellement, le vérin central (12a) est hydrauliquement relié à l'accumulateur d'énergie (14) en circuit fermé, dans la configuration de manoeuvre. Un tel circuit hydraulique (CH) permet aussi d'amortir les pivotements vers le bas de la deuxième unité (2') autour de son axe de liaison (8, 8') lorsque les extrémités guidées (9, 9') des unités (2, 2') se rapprochent. Les extrémités guidées (9, 9') des unités (2, 2') se rapprochent notamment lorsque le dispositif agricole (1) est dans sa configuration de manoeuvre, qu'il est déplacé et que les irrégularités du sol (S) provoquent le pivotement de la deuxième unité (2') autour de l'axe de liaison (8, 8') correspondant.

Il ressort de ce qui précède que dans le mode de réalisation préféré, le vérin central (12a) est relié à l'accumulateur d'énergie (14) de manière à exercer sur chacune des unités (2, 2') un effort d'écartement s'opposant à un mouvement de pivotement vers le bas des extrémités libres (10, 10') autour de l'axe de liaison (8, 8') associé, en configuration de travail et de manoeuvre.

En accord avec un autre aspect possible de l'invention, le dispositif (1) peut également comprendre un actionneur de manoeuvre (13) qui relie la potence (5) au châssis (3). L'actionneur de manoeuvre (13) est configuré pour pouvoir faire pivoter la potence (5) autour de l'axe de soulèvement (6) au moins entre la configuration de travail et la configuration de manoeuvre (figures 3 et 4). En configuration de travail, l'actionneur de manoeuvre (13) exerce préférentiellement un effort dirigé vers le haut sur la potence (5), permettant de diminuer la pression exercée par le dispositif (1) sur le sol (S) et réduisant ainsi les dégâts pouvant être occasionnés sur le tapis végétal lors de son déplacement. L'actionneur de manoeuvre (13) pourrait ainsi notamment comprendre ou consister en un ressort de traction. En combinaison avec l'actionneur de manoeuvre (13), l'actionneur central (12) permet alors de mieux répartir la pression exercée sur le sol (S) par chaque unité (2, 2'), en configuration de travail. Cette combinaison permet en particulier de réduire la pression exercée par chaque unité (2, 2') au niveau des extrémités libres (10, 10'). Cette combinaison permet ainsi de réduire les dégâts pouvant être occasionnés sur le tapis végétal lors du déplacement du dispositif (1), ce, en ne mettant en oeuvre qu'un unique actionneur central (12) et par l'intermédiaire d'une construction simple.

Il ressort de ce qui précède que, sans actionneur central (12), l'actionneur de manoeuvre (13) aurait tendance à augmenter la pression exercée au sol (S) par les unités (2, 2') au niveau des extrémités libres (10, 10') des première (2) et deuxième (2') unités. Sans actionneur central (12), l'actionneur de manoeuvre (13) aurait ainsi tendance à diminuer la pression exercée au sol (S) par les unités (2, 2') au niveau des extrémités guidées (9, 9') des première (2) et deuxième (2') unités, voire à soulever du sol (S) les extrémités guidées (9, 9'). En combinaison avec l'actionneur de manoeuvre (13), l'actionneur central (12) permet de diminuer la différence entre la pression exercée au sol (S) au niveau de l'extrémité libre (10, 10') et la pression exercée au sol (S) au niveau de l'extrémité guidée (9, 9') de chaque unité (2, 2'). L'actionneur central (12), respectivement le vérin central (12a), est dimensionné pour uniformiser la pression exercée au sol (S) au niveau des extrémités (9, 9', 10, 10') de chaque unité (2, 2'). De préférence, le vérin central (12a) est dimensionné pour uniformiser la pression exercée au sol (S) par chaque unité (2, 2') sur toute sa longueur, ce sur un sol (S) plan et horizontal.

De préférence et ainsi que représenté sur la figure 4, l'actionneur de manoeuvre (13) comprend ou consiste en un vérin de manoeuvre (13a). Le vérin de manoeuvre (13a) est de préférence de type vérin linéaire hydraulique. En configuration de travail, le vérin de manoeuvre (13a) est de préférence relié hydrauliquement à un accumulateur d'énergie, de sorte à exercer un effort dirigé vers le haut sur la potence (5). Un tel circuit hydraulique (CH) autorise également la potence (5), et par conséquent les unités (2, 2'), à pivoter autour de l'axe de soulèvement (6) selon les irrégularités du sol (S) (lors du déplacement selon la direction d'avance (DA)).

Le vérin de manoeuvre (13a) est avantageusement relié hydrauliquement au vérin central (12a), de sorte qu'une seule action est nécessaire pour actionner le vérin de manoeuvre (13a) et le vérin central (12a). Cette liaison simplifie aussi le schéma hydraulique du dispositif (1).

De préférence, le vérin de manoeuvre (13a) est à simple effet. Il est par ailleurs agencé et relié au même accumulateur d'énergie (14) que le vérin central (12a), de manière à exercer sur la potence (5) un effort dirigé vers le haut autour de l'axe de soulèvement (6) en configuration de travail, et préférentiellement également en configuration de manoeuvre. L'accumulateur d'énergie (14) est de préférence de type oléopneumatique. Grâce à l'accumulateur d'énergie (14), le vérin central (12a) exerce sur la potence (5) un effort dirigé vers le haut autour de l'axe de soulèvement (6) en configuration de travail et de manoeuvre lorsque l'accumulateur d'énergie (14) et le vérin central (12a) sont en circuit fermé. De préférence, le vérin de manoeuvre (13a) et le vérin central (12a) sont dimensionnés de manière à répartir uniformément la pression exercée au sol (S) par les deux unités (2, 2'). Plus précisément, le vérin de manoeuvre (13a) et le vérin central (12a) sont dimensionnés de manière à égaliser la pression exercée au sol (S) au niveau de l'extrémité libre (10) de la première unité (2), celle exercée au sol (S) au niveau de l'extrémité guidée (9) de la première unité (2), celle exercée au sol (S) au niveau de l'extrémité libre (10') de la deuxième unité (2') et celle exercée au sol (S) au niveau de l'extrémité guidée (9') de la deuxième unité (2'), ce sur sol (s) plan et horizontal en configuration de travail du dispositif (1).

Comme le montre la figure 4, l'actionneur de manoeuvre (13) peut comprendre un vérin de transport (13b) permettant de faire pivoter la potence (5) autour de l'axe de soulèvement (6) entre la configuration de manoeuvre et la configuration de transport. De préférence, l'actionneur de manoeuvre (13) est avantageusement monté de manière articulée avec le châssis (3) à l'une de ses extrémités et avec la potence (5) à son autre extrémité. Dans un mode alternatif, le vérin de manoeuvre (13a) sert également à faire pivoter la potence (5) entre configuration de manoeuvre et configuration de transport.

En relation avec une application préférentielle de l'invention, ressortant des figures, chaque unité (2, 2') comprend ou consiste en une barre de coupe équipée d'une pluralité d'organes de traitement (7). Chaque organe de traitement (7) est entrainé en rotation autour d'un axe d'organe (23) respectif sensiblement vertical en configuration de travail. Dans la configuration de transport, les axes d'organe (23) des deux unités (2, 2') sont préférentiellement parallèles entre eux. Chaque organe de traitement (7) comporte au moins deux outils de coupe (7a) formant une trajectoire (T) chevauchant la ou les trajectoires (T) des outils de coupe (7a) adjacents. De plus, les trajectoires (T) des outils de coupe (7a) des organes de traitement (7) de chaque unité (2, 2') les plus proches des extrémités guidées (9, 9') se chevauchent avantageusement en configuration de travail sur sol (S) plan, évitant ainsi de laisser une bande de végétaux non fauchée.

Afin de perturber au minimum le flux de végétaux coupés par les outils de coupe (7a) du dispositif (1), l'actionneur central (12) est situé à l'arrière des organes de traitement (7).

Ainsi qu'il ressort des figures, la première unité (2) s'étend selon une direction longitudinale (DL) transversale à la direction d'avance (DA) en configuration de travail. La première unité (2) est montée pivotante par rapport à la potence (5) autour de l'axe de liaison (8). La première unité (2) comporte une extrémité guidée (9) et une extrémité libre (10). L'extrémité libre (10) de la première unité (2) est plus éloignée de l'axe de liaison (8) que l'extrémité guidée (9) correspondante.

Les variantes de réalisation de l'invention illustrées sur les figures annexées sont décrites plus en détail ci-après.

Dans la présente, les configurations pouvant être occupées par le dispositif agricole (1) sont au moins au nombre de trois, à savoir une configuration de travail, une configuration de manoeuvre et une configuration de transport.

Ces trois configurations illustrées sur les figures pour un dispositif agricole (1) particulier déterminé, à savoir un dispositif de fauche à deux unités (2, 2'), peuvent être définies comme suit. Dans la configuration de travail (figures 1A et 1B), la première unité (2) et la deuxième unité (2') reposent sur le sol (S) au moins partiellement et leurs directions longitudinales sont sensiblement parallèles, au moins vues selon un axe d'organe (23).

Dans les configurations de manoeuvre et de transport, la largeur du dispositif (1) est réduite. Dans la configuration de manoeuvre (figure 3), les unités (2 et 2') sont éloignées du sol (S) au moins par pivotement de la potence (5) autour de l'axe de soulèvement (6), et, de préférence, chaque unité (2, 2') est pivotée autour de l'axe de liaison (8, 8') correspondant. Le dispositif (1) peut également comporter un actionneur de flanc reliant la potence (5) à la première unité (2) et configuré pour permettre le pivotement et/ou le maintien en position de la première unité (2) autour de l'axe de liaison (8, 8') correspondant. A cet effet, l'actionneur de flanc est éloigné de l'axe de liaison (8, 8') correspondant.

Pour passer de la configuration de travail à la configuration de manoeuvre, l'extrémité libre (10) de la première unité (2) est pivotée autour de l'axe de liaison (8, 8') correspondant par l'actionneur de flanc, avec une amorce de pivotement vers le haut, la deuxième unité (2') est pivotée par l'actionneur central (12) autour de l'axe de liaison correspondant (8, 8') dans le sens inverse, tandis que la potence (5) est pivotée autour de l'axe de soulèvement (6) dans le même sens que la deuxième unité (2').

Le dispositif (1) peut également comporter un vérin de pliage (15) reliant la potence (5) à un compas (16) comportant une première bielle (17) articulée au vérin de pliage (15) d'une part et à la première unité (2) d'autre part ainsi qu'une deuxième bielle (18) articulée au vérin de pliage (15) d'une part et à la deuxième unité (2') d'autre part.

De préférence, pour arriver en configuration de transport, le dispositif (1) doit d'abord se trouver en configuration de manoeuvre. Pour passer de la configuration de manoeuvre à la configuration de transport, l'extrémité libre (10') de la deuxième unité (2') est pivotée par l'actionneur de pliage (15) autour de l'axe de liaison (8, 8') correspondant, sur un secteur angulaire légèrement inférieur 180°, avec une amorce de pivotement vers le haut, tandis que l'extrémité de la potence (5) opposée à l'extrémité articulée avec le châssis (3) est pivotée par l'actionneur de manoeuvre (13) autour de l'axe de soulèvement (6) par rapport au châssis (3) dans le même sens, jusqu'à ce que les directions longitudinales (DL, DL') soient au moins sensiblement verticales.

Le dispositif agricole (1) ou la machine agricole (100) comprenant deux dispositifs (1) tels que décrits précédemment, peut comporter, comme le montrent les figures 1 à 3, un châssis (3) spécifique et propre par lequel il/elle peut être relié(e) à un attelage d'un véhicule (4) tracteur, permettant un montage (démontable et temporaire) à l'avant ou à l'arrière du véhicule (4). A cet effet, le châssis (3) peut notamment comporter deux tourillons inférieurs (20) et un tourillon supérieur (21), afin d'être relié à l'attelage trois points d'un véhicule (4) tracteur agricole. De préférence, le plan médian (PM) passe par le tourillon supérieur (21) du châssis (3). La direction d'avance (DA) est sensiblement perpendiculaire à l'axe passant par les deux tourillons inférieurs (20) et de préférence sensiblement horizontale. Le châssis (3) peut cependant aussi être intégré au véhicule (4) ou être confondu avec celui de ce dernier. Le dispositif (1) est conçu pour un déplacement sur un sol (S) plan et préférentiellement horizontal.

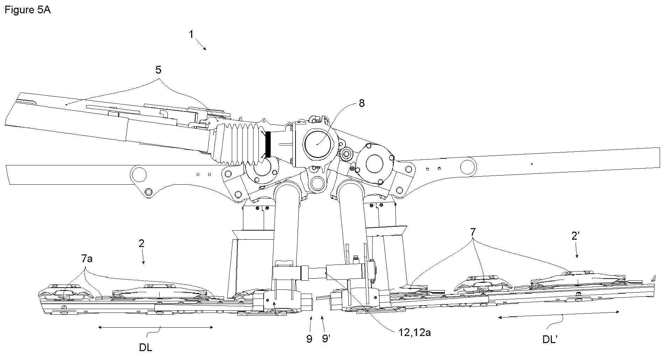

Préférentiellement, l'actionneur central (12) exerce un effort d'écartement sur chacune des première unité (2) et deuxième unité (2'), ces efforts d'écartement étant mutuellement opposés et de même intensité. L'actionneur central (12) présente également une course opérationnelle limitée. Lorsqu'il est rétracté au maximum, les extrémités guidées (9, 9') des première et deuxième unités (2, 2') sont de préférence en contact (figures 5B). Ainsi qu'il ressort de la figure 5B, lorsque le vérin central (12a) est rétracté au maximum, l'angle entre la direction longitudinale (DL) de la première unité (2) et la direction longitudinale (DL') de la deuxième unité (2') est compris entre 0 et 10° vu selon la direction d'avance (DA). Il ressort de la figure 5A que lorsque le vérin central (12a) est allongé au maximum, l'angle entre la direction longitudinale (DL) de la première unité (2) et la direction longitudinale (DL') de la deuxième unité (2') est également compris entre 0 et 10° vu selon la direction d'avance (DA).

Lorsque les irrégularités du sol (S) impliquent que l'actionneur central (12) est allongé au maximum et que ce dernier est désolidarisé d'une des unités (2, 2'), l'extrémité libre (10, 10') d'au moins une unité (2, 2') peut continuer son pivotement vers le haut autour de l'axe de liaison (8, 8') correspondant, auquel cas l'actionneur central (12) ne transmet alors plus d'effort d'écartement entre la première unité (2) et la deuxième unité (2').

Il en résulte une possibilité de choisir un actionneur central (12) à course limitée et de faible prix, en particulier sous forme de vérin hydraulique (12a), qui autorise un réglage aisé de l'effort d'écartement fourni par ce dernier et donc de la pression maximale exercée sur le sol (S) par chacune des unités (2, 2'), qui sont reliées ensemble à la potence (5).

Afin de simplifier avantageusement la construction du dispositif (1) et de le rendre plus compacte, plus robuste, plus facile à fabriquer et moins coûteuse, les axes de liaison (8, 8') des deux unités (2, 2') sont confondus. L'axe de liaison (8, 8') commun aux deux unités (2, 2') réalise alors également une liaison pivot entre les deux unités (2 et 2'). Les directions longitudinales (DL, DL') de ces dernières sont avantageusement situées toutes deux dans un même plan perpendiculaire à l'axe de liaison (8, 8') correspondant. En configuration de manoeuvre, les unités (2 et 2'), respectivement leurs directions longitudinales (DL, DL'), restent aussi sensiblement alignées.

En variante, tel que représenté sur la figure 1, chaque unité (2, 2') peut aussi être reliée à la potence (5) par un axe de liaison (8, 8') propre, distinct.

Comme le montrent les figures 4 et 5B notamment, le ou chaque axe de liaison (8, 8') est agencé sensiblement perpendiculairement à la direction longitudinale (DL, DL') d'au moins une unité (2', 2), préférentiellement des deux. Préférentiellement, le ou chaque axe de liaison (8, 8') est sensiblement parallèle à la direction d'avance (DA). Le ou chaque axe de liaison (8, 8') est en outre avantageusement situé à distance au-dessus de l'actionneur central (12) en configuration de travail. De cette manière, l'actionneur central (12) ne perturbe pas le passage entre configurations de travail et de transport. De manière préférentielle, la distance séparant l'actionneur central (12) du ou de chaque axe de liaison (8, 8') est supérieure au quart, plus préférentiellement à la moitié du diamètre de la trajectoire (T) extérieure des outils de coupe (7a) d'un organe de traitement (7). En effet, plus le vérin central (12) est éloigné du ou de chaque axe de liaison (8, 8'), moins l'effort d'écartement à fournir sera important. De préférence, la distance séparant l'actionneur central (12) du ou de chaque axe de liaison (8, 8') est sensiblement égale au diamètre de la trajectoire (T) extérieure des outils de coupe (7a) d'un organe de traitement (7).

Lorsque les axes de liaison (8, 8') des deux unités (2, 2') sont confondus, l'axe de liaison (8, 8') se situe de préférence à égale distance des deux extrémités guidées (9) et (9') et de préférence à égale distance des deux extrémités libres (10) et (10'). Il en résulte un montage équilibré des unités (2) et (2') par rapport au axe de liaison (8, 8'). De plus, la dimension du dispositif (1) en configuration de transport est réduite.

Ainsi, le dispositif d'articulation entre potence (5) et châssis (3) autorise au moins un pivotement selon l'axe de soulèvement (6) sensiblement parallèle à la direction d'avance (DA), au moins en configuration de travail. De préférence l'axe de soulèvement (6) est sensiblement horizontal dans la configuration de travail. Il est par exemple composé de deux liaisons rotules, de préférence disposées l'une devant l'autre selon la direction d'avance (DA). L'axe de soulèvement (6) passe par ces deux liaisons rotules. Dans un mode de réalisation alternatif, cet axe de soulèvement (6) peut aussi être incliné vers l'arrière et/ou former un angle avec la direction d'avance (DA).

Avantageusement, la potence (5) est de forme allongée et, en configuration de travail, orientée sensiblement horizontalement et/ou parallèlement au sol (S). Plus précisément, le plan passant par l'axe de soulèvement (6) et le ou chaque axe de liaison (8, 8') est sensiblement horizontal, en configuration de travail. La potence (5) est aussi orientée transversalement et de préférence perpendiculairement à la direction d'avance (DA). Dans un mode de réalisation alternatif, le dispositif (1) peut être monté sur un attelage avant du véhicule (4) : l'axe de soulèvement (6) entre potence (5) et châssis (3) est alors orienté perpendiculairement à la direction d'avance (DA) et horizontalement et/ou parallèlement au sol (S), la potence (5) étant orientée parallèlement à la direction d'avance (DA) et sensiblement horizontalement et préférentiellement légèrement inclinée vers l'arrière.

L'invention a également pour objet une machine agricole (100) comprenant un châssis (3) pouvant être monté sur ou intégré à un véhicule (4) se déplaçant selon une direction d'avance (DA), cette machine agricole (100) étant caractérisée en ce qu'elle comprend deux dispositifs agricoles (1) tels que décrits précédemment, préférentiellement arrangés de manière symétrique par rapport à un plan médian (PM) du véhicule (4).

Selon une autre application de l'invention non représentée, chaque organe de traitement (7) est équipé de dents, chaque unité de travail (2, 2') formant une unité de collecte ou de ramassage de végétaux.

Bien entendu, l'invention n'est pas limitée aux modes de réalisation décrits et représentés dans les dessins annexés.

## Revendications

1. Dispositif agricole (1) comportant une première unité (2) et une deuxième unité (2') de travail, le dispositif (1) pouvant occuper une configuration de travail, dans laquelle chaque unité (2, 2') repose au moins partiellement sur le sol (S) et une configuration de transport, le dispositif (1) étant relié à un châssis (3) pouvant être monté sur ou intégré à un véhicule (4) se déplaçant selon une direction d'avance (DA), le dispositif (1) comprenant une potence (5) montée pivotante sur le châssis (3) autour d'un axe de soulèvement (6) sensiblement parallèle à la direction d'avance (DA) et autour duquel le dispositif (1) est pivoté pour aboutir aux différentes configurations précitées, chaque unité (2, 2') comportant une pluralité d'organes de traitement (7) de végétaux et s'étendant selon une direction longitudinale (DL, DL') respective transversale par rapport à la direction d'avance (DA) au moins en configuration de travail, chaque unité (2, 2') étant montée pivotante par rapport à la potence (5) autour d'un axe de liaison (8, 8') transversal par rapport à la direction longitudinale (DL, DL') correspondante, chaque unité (2, 2') comportant une extrémité guidée (9, 9') respective et une extrémité libre (10, 10') respective, plus éloignée de l'axe de liaison (8, 8') correspondant que l'extrémité guidée (9, 9') correspondante,
dispositif agricole (1) **caractérisé en ce qu'**il comporte un actionneur central (12) configuré pour exercer sur chacune des unités (2, 2'), au moins en configuration de travail du dispositif (1), un effort d'écartement s'opposant à un mouvement de pivotement vers le bas de son extrémité libre (10, 10') autour de l'axe de liaison (8, 8') correspondant.

2. Dispositif selon la revendication 1, **caractérisé en ce que** l'actionneur central (12) comprend ou consiste en un vérin central (12a) hydraulique s'étendant en configuration de travail au moins partiellement entre les deux unités (2, 2') et en-dessous du ou de chaque axe de liaison (8, 8').

3. Dispositif selon la revendication 2, **caractérisé en ce que** le vérin central (12a) est hydrauliquement relié à au moins un accumulateur d'énergie (14), au moins dans la configuration de travail du dispositif (1).

4. Dispositif selon l'une quelconque des revendications 1 à 3, **caractérisé en ce que** dans la configuration de transport du dispositif (1), la potence (5) est orientée sensiblement verticalement et située au moins partiellement entre les unités (2, 2').

5. Dispositif selon l'une quelconque des revendications 1 à 4, **caractérisé en ce que** l'actionneur central (12) est désolidarisé de l'une des unités (2, 2'), au moins en configuration de transport.

6. Dispositif selon l'une quelconque des revendications 1 à 5, **caractérisé en ce que** l'actionneur central (12) est solidaire de l'une seulement des deux unités (2, 2'), et est en appui sur l'autre unité (2, 2'), au moins en configuration de travail.

7. Dispositif selon l'une quelconque des revendications 1 à 6, **caractérisé en ce qu'**il est également configuré pour occuper une configuration de manoeuvre, dans laquelle la potence (5) est légèrement relevée autour de l'axe de soulèvement (6) par rapport à sa position en configuration de travail et dans laquelle l'actionneur central (12) est allongé au maximum.

8. Dispositif selon l'une quelconque des revendications 1 à 7, **caractérisé en ce qu'**il comprend un actionneur de manoeuvre (13) qui relie la potence (5) au châssis (3), l'actionneur de manoeuvre (13) comprenant ou consistant en un vérin de manoeuvre (13a) relié hydrauliquement à un accumulateur d'énergie de sorte à exercer un effort dirigé vers le haut sur la potence (5), en configuration de travail.

9. Dispositif selon les revendications 2 et 8, **caractérisé en ce qu'**en configuration de travail, le vérin de manoeuvre (13a) est relié hydrauliquement au vérin central (12a).

10. Dispositif selon l'une quelconque des revendications 7 à 9, **caractérisé en ce que**, en configuration de manoeuvre du dispositif (1), l'actionneur central (12) exerce sur chacune des unités (2, 2') un effort d'écartement s'opposant à un mouvement de pivotement vers le bas de son extrémité libre (10, 10') autour de l'axe de liaison (8, 8') correspondant.

11. Dispositif selon l'une quelconque des revendications 1 à 10, **caractérisé en ce que** les axes de liaison (8, 8') des deux unités (2, 2') sont confondus.

12. Dispositif selon l'une quelconque des revendications 1 à 11, **caractérisé en ce que** chaque unité (2, 2') comprend ou consiste en une barre de coupe équipée d'une pluralité d'organes de traitement (7), chacun des organes de traitement (7) étant entrainé en rotation autour d'un axe d'organe (23) sensiblement vertical et comportant au moins deux outils de coupe (7a) formant une trajectoire (T) chevauchant la ou les trajectoires (T) des outils de coupe (7a) adjacents et **en ce que** les trajectoires (T) des outils de coupe (7a) des organes de traitement (7) de chaque unité (2, 2') les plus proches des extrémités guidées (9, 9') se chevauchent en configuration de travail sur sol (S) plan.

13. Machine agricole (100) comprenant un châssis (3) pouvant être monté sur ou intégré à un véhicule (4) se déplaçant selon une direction d'avance (DA), machine agricole (100) **caractérisée en ce qu'**elle comprend deux dispositifs agricoles (1) selon l'une des revendications 1 à 12, préférentiellement arrangés de manière symétrique par rapport à un plan médian (PM) du châssis (3). 1

## Patentansprüche

1. Landwirtschaftliche Vorrichtung (1) mit einer ersten Arbeitseinheit (2) und einer zweiten Arbeitseinheit (2'), wobei die Vorrichtung (1) eine Arbeitskonfiguration, bei der jede Einheit (2, 2') zumindest teilweise auf dem Boden (S) aufliegt, und eine Transportkonfiguration einnehmen kann, wobei die Vorrichtung (1) mit einem Rahmen (3) verbunden ist, der an einem Fahrzeug (4), das sich in einer Vorschubrichtung (DA) bewegt, angebracht oder in dieses integriert werden kann, wobei die Vorrichtung (1) einen Tragarm (5) umfasst, der am Rahmen (3) um eine Liftachse (6) schwenkbar angebracht ist, die im Wesentlichen parallel zu der Vorschubrichtung (DA) verläuft und um die die Vorrichtung (1) geschwenkt wird, um die verschiedenen oben genannten Konfigurationen einzunehmen, wobei jede Einheit (2, 2') eine Vielzahl von Pflanzenverarbeitungselementen (7) umfasst und sich zumindest in der Arbeitskonfiguration in einer jeweiligen Längsrichtung (DL, DL') quer zur Vorschubrichtung (DA) erstreckt, wobei jede Einheit (2, 2') in Bezug auf den Tragarm (5) um eine Verbindungsachse (8, 8'), die sich quer zur entsprechenden Längsrichtung (DL, DL') erstreckt, schwenkbar angebracht ist, wobei jede Einheit (2, 2') ein jeweiliges geführtes Ende (9, 9') und ein jeweiliges freies Ende (10, 10') aufweist, das weiter von der entsprechenden Verbindungsachse (8, 8') entfernt ist als das entsprechende geführte Ende (9, 9'),
wobei sich die landwirtschaftliche Vorrichtung (1) **dadurch gekennzeichnet, dass** sie einen zentralen Aktuator (12) umfasst, der so konfiguriert ist, dass er auf jede der Einheiten (2, 2'), zumindest in der Arbeitskonfiguration der Vorrichtung (1), eine Abstandskraft ausübt, die einer Abwärtsschwenkbewegung ihres freien Endes (10, 10') um die entsprechende Verbindungsachse (8, 8') entgegenwirkt.

2. Vorrichtung nach Anspruch 1, **dadurch gekennzeichnet, dass** der zentrale Aktuator (12) einen hydraulischen Mittelzylinder (12a) umfasst oder aus einem solchen besteht, der sich in der Arbeitskonfiguration zumindest teilweise zwischen den beiden Einheiten (2, 2') und unterhalb der bzw. jeder Verbindungsachse (8, 8') erstreckt.

3. Vorrichtung nach Anspruch 2, **dadurch gekennzeichnet, dass** der Mittelzylinder (12a) zumindest in der Arbeitskonfiguration der Vorrichtung (1) mit mindestens einem Energiespeicher (14) hydraulisch verbunden ist.

4. Vorrichtung nach irgend einem der Ansprüche 1 bis 3, **dadurch gekennzeichnet, dass** in der Transportkonfiguration der Vorrichtung (1) der Tragarm (5) im Wesentlichen vertikal ausgerichtet ist und sich zumindest teilweise zwischen den Einheiten (2, 2') befindet.

5. Vorrichtung nach einem der Ansprüche 1 bis 4, **dadurch gekennzeichnet, dass** der zentrale Aktuator (12) zumindest in der Transportkonfiguration von einer der Einheiten (2, 2') abgekoppelt ist.

6. Vorrichtung nach einem der Ansprüche 1 bis 5, **dadurch gekennzeichnet, dass** der zentrale Aktuator (12) nur mit einer der beiden Einheiten (2, 2') fest verbunden ist und zumindest in der Arbeitskonfiguration an der anderen Einheit (2, 2') anliegt.

7. Vorrichtung nach einem der Ansprüche 1 bis 6, **dadurch gekennzeichnet, dass** sie auch so konfiguriert ist, dass sie eine Manövrierkonfiguration einnimmt, bei der der Tragarm (5) um die Liftachse (6) gegenüber seiner Position in der Arbeitskonfiguration leicht angehoben ist und der zentrale Aktuator (12) maximal ausgefahren ist.

8. Vorrichtung nach einem der Ansprüche 1 bis 7, **dadurch gekennzeichnet, dass** sie einen Manövrieraktuator (13) umfasst, der den Tragarm (5) mit dem Rahmen (3) verbindet, wobei der Manövrieraktuator (13) einen Manövrierzylinder (13a) umfasst oder daraus besteht, der hydraulisch mit einem Energiespeicher verbunden ist, so dass er in einer Arbeitskonfiguration eine nach oben gerichtete Kraft auf den Tragarm (5) ausübt.

9. Vorrichtung nach den Ansprüchen 2 und 8, **dadurch gekennzeichnet, dass** in der Arbeitskonfiguration der Manövrierzylinder (13a) hydraulisch mit dem Mittelzylinder (12a) verbunden ist.

10. Vorrichtung nach einem der Ansprüche 7 bis 9, **dadurch gekennzeichnet, dass** in der Manövrierkonfiguration der Vorrichtung (1) der zentrale Aktuator (12) auf jede der Einheiten (2, 2') eine Abstandskraft ausübt, die einer nach Abwärtsschwenkbewegung ihres freien Endes (10, 10') um die entsprechende Verbindungsachse (8, 8') entgegenwirkt.

11. Vorrichtung nach einem der Ansprüche 1 bis 10, **dadurch gekennzeichnet, dass** die Verbindungsachsen (8, 8') der beiden Einheiten (2, 2') zusammenfallen.

12. Vorrichtung nach einem der Ansprüche 1 bis 11, **dadurch gekennzeichnet, dass** jede Einheit (2, 2') einen Mähbalken umfasst oder aus einem solchen besteht, der mit einer Vielzahl von Verarbeitungselementen (7) ausgestattet ist, wobei jedes der Verarbeitungselemente (7) um eine im Wesentlichen vertikale Elementachse (23) drehangetrieben wird und mindestens zwei Schneidwerkzeuge (7a) umfasst, die eine Bahn (T) bilden, die sich mit der oder den Bahnen (T) der benachbarten Schneidwerkzeuge (7a) überschneidet, und dass sich die Bahnen (T) der Schneidwerkzeuge (7a) der Verarbeitungselemente (7) jeder Einheit (2, 2'), die den geführten Enden (9, 9') am nächsten liegen, in der Arbeitskonfiguration auf ebenem Boden (S) überlappen.

13. Landwirtschaftliche Maschine (100) mit einem Rahmen (3), der an einem Fahrzeug (4), das sich in einer Vorschubrichtung (DA) bewegt, angebracht oder in dieses integriert werden kann, wobei die landwirtschaftliche Maschine (100) **dadurch gekennzeichnet ist, dass** sie zwei landwirtschaftliche Vorrichtungen (1) nach einem der Ansprüche 1 bis 12 umfasst, die vorzugsweise symmetrisch in Bezug auf eine Mittelebene (PM) des Rahmens (3) angeordnet sind.

## Claims

1. Agricultural device (1) comprising a first work unit (2) and a second work unit (2'), the device (1) being able to occupy a work configuration, in which each unit (2, 2') rests at least partially on the ground (S), and a transport configuration, the device (1) being connected to a chassis (3) that can be mounted on or integrated into a vehicle (4) moving in a direction of advance (DA), the device (1) comprising a support arm (5) pivotably mounted on the chassis (3) around a lift axis (6) substantially parallel to the direction of advance (DA) and around which the device (1) is pivoted to reach the various configurations mentioned above, each unit (2, 2') comprising a plurality of plant processing elements (7) and extending in a respective longitudinal direction (DL, DL') that is transverse relative to the direction of advance (DA) at least in the work configuration, each unit (2, 2') being pivotably mounted relative to the support arm (5) around a connecting axis (8, 8') that is transverse relative to the corresponding longitudinal direction (DL, DL'), each unit (2, 2') comprising a respective guided end (9, 9') and a respective free end (10, 10') further away from the corresponding connecting axis (8, 8') than the corresponding guided end (9, 9'),
agricultural device (1) **characterized in that** it comprises a central actuator (12) configured to apply to each of the units (2, 2'), at least in the work configuration of the device (1), a biasing force opposing a downward pivoting movement by its free end (10, 10') around the corresponding connecting axis (8, 8').

2. Device according to claim 1, **characterized in that** the central actuator (12) comprises or consists of a central hydraulic cylinder (12a) extending in the work configuration at least partially between the two units (2, 2') and below the or each connecting axis (8, 8').

3. Device according to claim 2, **characterized in that** the central cylinder (12a) is hydraulically connected to at least one energy accumulator (14), at least in the work configuration of the device (1).

4. Device according to any one of claims 1 to 3, **characterized in that**, in the transport configuration of the device (1), the support arm (5) is substantially vertically oriented and located at least partially between the units (2, 2').

5. Device according to any one of claims 1 to 4, **characterized in that** the central actuator (12) is unfastened from one of the units (2, 2'), at least in the transport configuration.

6. Device according to any one of claims 1 to 5, **characterized in that** the central actuator (12) is rigidly fastened to only one of the two units (2, 2'), and rests against the other unit (2, 2'), at least in the work configuration.

7. Device according to any one of claims 1 to 6, **characterized in that** it is also configured to occupy a headland configuration, in which the support arm (5) is slightly raised around the lift axis (6) relative to its position in the work configuration and in which the central actuator (12) is extended as far as possible.

8. Device according to any one of claims 1 to 7, **characterized in that** it comprises a headland actuator (13) that links the support arm (5) to the chassis (3), the headland actuator (13) comprising or consisting of a headland cylinder (13a) hydraulically connected to an energy accumulator so as to apply an upward-directed force on the support arm (5), in the work configuration.

9. Device according to claims 2 and 8, **characterized in that**, in the work configuration, the headland cylinder (13a) is hydraulically connected to the central cylinder (12a).

10. Device according to any one of claims 7 to 9, **characterized in that**, in the headland configuration of the device (1), the central actuator (12) applies on each of the units (2, 2') a biasing force opposing a downward pivoting movement by its free end (10, 10') around the corresponding connecting axis (8, 8').

11. Device according to any one of claims 1 to 10, **characterized in that** the connecting axes (8, 8') of the two units (2, 2') are coincident.

12. Device according to any one of claims 1 to 11, **characterized in that** each unit (2, 2') comprises or consists of a cutter bar equipped with a plurality of processing elements (7), each of the processing elements (7) being driven in rotation around a substantially vertical body axis (23) and comprising at least two cutting tools (7a) that form a trajectory (T) overlapping the trajectory or the trajectories (T) of the adjacent cutting tools (7a) and **in that** the trajectories (T) of the cutting tools (7a) of the processing elements (7) of each unit (2, 2') closest to the guided ends (9, 9') overlap in the work configuration on flat ground (S).

13. Agricultural machine (100) comprising a chassis (3) that can be mounted on or integrated into a vehicle (4) moving in a direction of advance (DA), agricultural machine (100) **characterized in that** it comprises two agricultural devices (1) according to one of claims 1 to 12, preferably arranged symmetrically relative to a midplane (PM) of the chassis (3).
